# EUROPEAN PATENT APPLICATION

(11) **EP 0 806 659 A1**
(43) Date of publication of application: **12.11.1997**
(21) Application number: 97303094.3
(22) Date of filing: 06.05.1997
(51) Int. Cl.: G01N 27/447

(54) **Apparatus for electrophoresing samples and for scanning such electrophoresed samples**

(30) Priority: 06.05.1996 US 16951
(71) Applicant: HELENA LABORATORIES CORPORATION, Beaumont Texas 77704-0752 (US)
(72) Inventor: Golias Tipton L., Beaumont, Texas (US); Sarrine,Robert J., Beaumont, Texas (US); Kelley,Charles D., Lumberton, Texas (US); Garsee,Henri A., Kountze, Texas (US)
(74) Representative: W.P. Thompson & Co.

(57) **Abstract**

An apparatus for electrophoresing a sample and for thereafter either scanning in the visible mode or the fluorescent mode, under control of a central processor, to provide scanning densitometry of the electrophoresed sample, and with the fluorescent mode scanning being performed in situ.

## Description

The present invention relates to apparatus for electrophoresing samples and for scanning such electrophoresed samples.

More particularly the present invention relates in general to the field of electrophoretic analysis of liquid samples, for use in the electrophoresis process beginning with the step of applying liquid samples to an electrophoresis support media and without moving the support media further including the steps of electrophoresing, staining, incubating, and drying the sample. The present invention further includes the scanning and densitometry measurements on the scanned samples in both the visible and fluorescent modes.

In the basic method of electrophoresis, charged molecules of the sample fluids are separated under the influence of an electrical field wherein the liquid sample to be examined is applied to a support medium having a porous surface. Because the various components of the fluid move at different rates through the support medium, the liquid sample may be separated into its respective components. Subsequent staining of the fractional components in the support medium may then be subjected to optical densitometry or other methods for examination.

It is an aspect of the present invention to provide automatic electrophoresis through the drying step, i.e., all the steps being performed without laboratory technician intervention.

It is an aspect of the present invention to provide automatic electrophoresis with fluorescent scanning, i.e., all the steps through and including the fluorescent scanning being performed without laboratory technician intervention.

It is an aspect of the present invention to provide an electrophoresis system with both visual and fluorescent scanning modes.

It is an aspect of the present invention to provide in-situ fluorescent scanning.

It is an aspect of the present invention to automatically deposit a sample in any location or configuration on the electrophoresis plate.

It is an aspect of the present invention to vary the quantity of the sample drawn from a sample supply and delivered to the electrophoresis plate.

It is an aspect of the present invention to aspirate and to deposit the sample from various position along the Z axis (vertical).

It is an aspect of the present invention to control temperature within an electrophoresis chamber.

It is an aspect of the present invention to provide a thermoelectric heating/cooling device in the bottom of the electrophoresis chamber for cooling the electrophoresis plate.

It is an aspect of the present invention to provide additional electrodes to create a plurality of electrical zones within the electrophoresis chamber.

It is an aspect of the present invention to provide automatic electrophoresis with fluorescence with self-calibration.

The present invention provides an automatic electrophoresis apparatus with fluorescent scanning. The present invention allows the laboratory technician to perform automatic electrophoresis with fluorescent scanning by entering data into a computer, e.g., the type of sample and test to be performed, manually depositing a large quantity of the sample. In the preferred embodiment the fluorescent scanning is performed in situ, i.e., with no laboratory technician movement of the gel plate during either the electrophoresis or scanning operations. Further, the present invention provides for scanning in the visible spectrum.

The present invention performs in-situ fluorescent scanning. Second, the present invention provides for depositing the sample for various thickness electrophoresis plates depending on the sample, test, and thickness of the electrophoresis plate. Third, the present invention can deposit the sample in any location on the electrophoresis plate, not just one or two fixed positions as in the prior art. Fourth, since the process of electrophoresis is temperature sensitive, the present invention includes a thermoelectric heating/cooling device for controlling the temperature of the electrophoresis plate. Fifth, the present invention provides for a varying the size or amount of sample drawn from the sample tray and the amount deposited on the plate, as contrasted to prior systems which permitted only a fixed quantity of sample to be deposited. Sixth, the present invention provides for the creation of additional electrophoresis or separation zones in the electrophoresis chamber.

The present invention will now be further described, by way of example, with reference to the accompanying drawings, in which:-
FIG. 1A is a diagram of the components of the present system;
FIG. 1B is a diagram of the actual components of the preferred embodiment;
FIG. 2 is a block diagram of the central processing unit (CPU) located in the visible scanner.
FIG. 3 is a block diagram of the separation unit CPU, also known as the process control CPU.
FIG. 4 is a top view of the fluorescent scanner.
FIG. 5A is a side view of the fluorescent scanner.
FIG. 5B shows a double zone configuration of the electrophoresis chamber.
FIG. 5C is the lid to the electrophoresis chamber.
FIG. 6 is a top view of the electrophoresis chamber in the separation unit.
FIG. 7 is a side view of the components of the scanner in the fluorescent scanner.

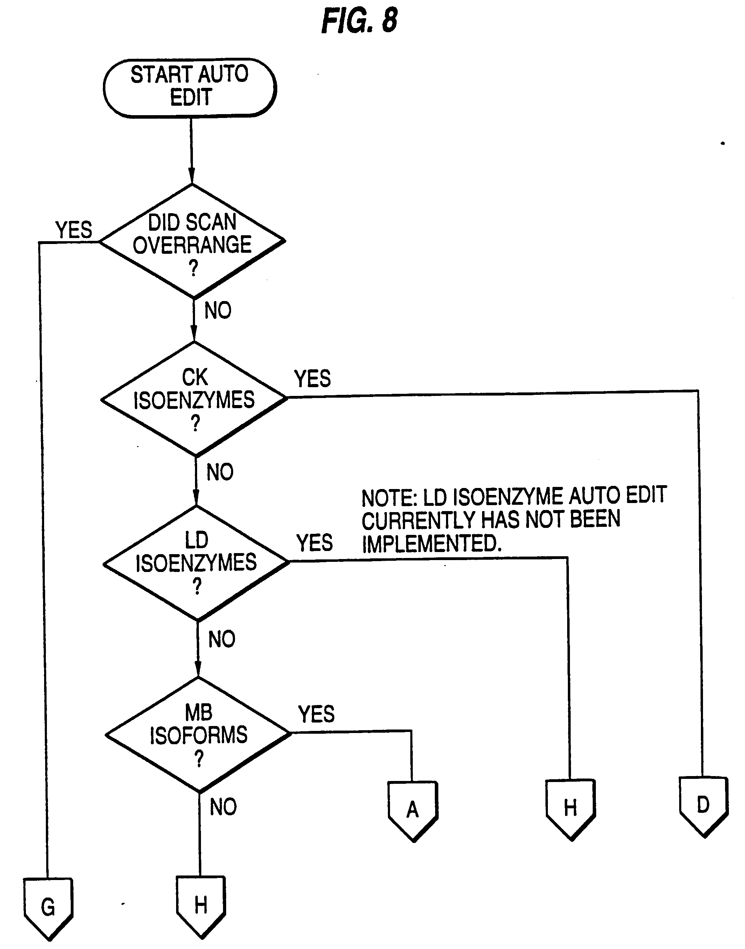

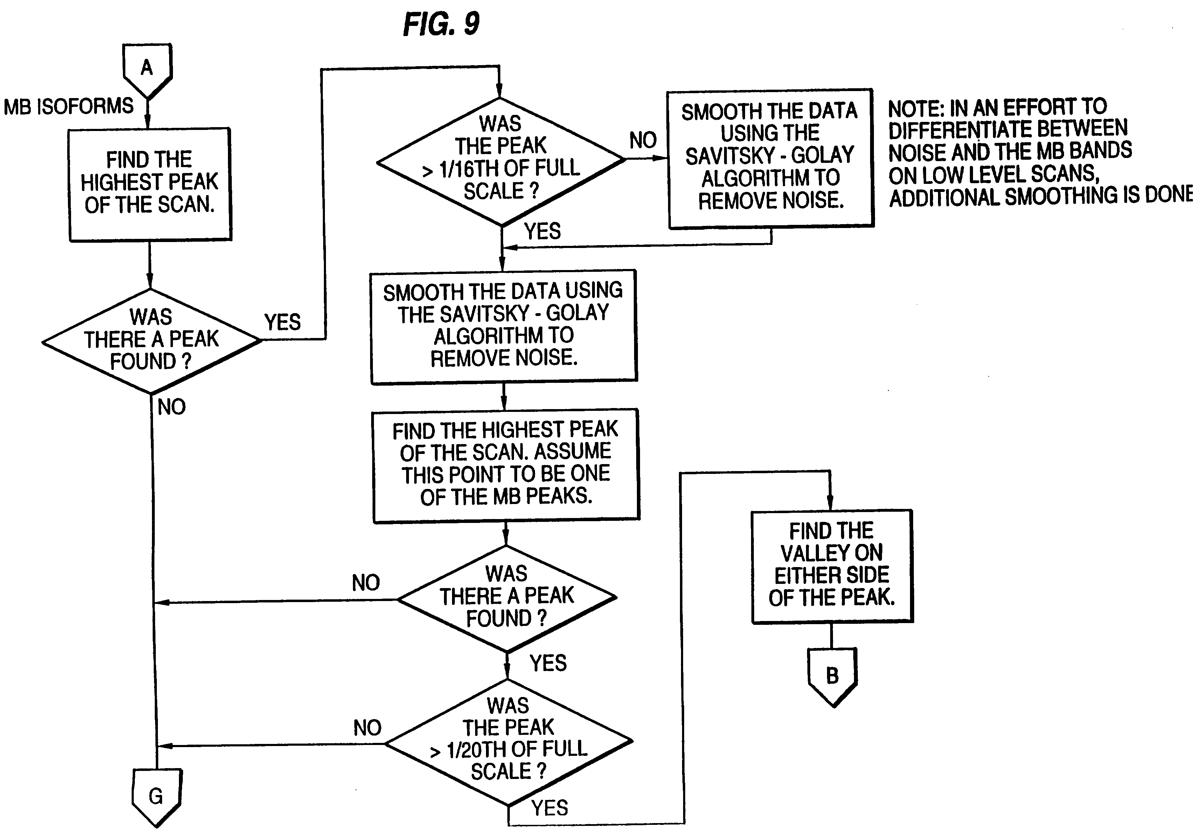

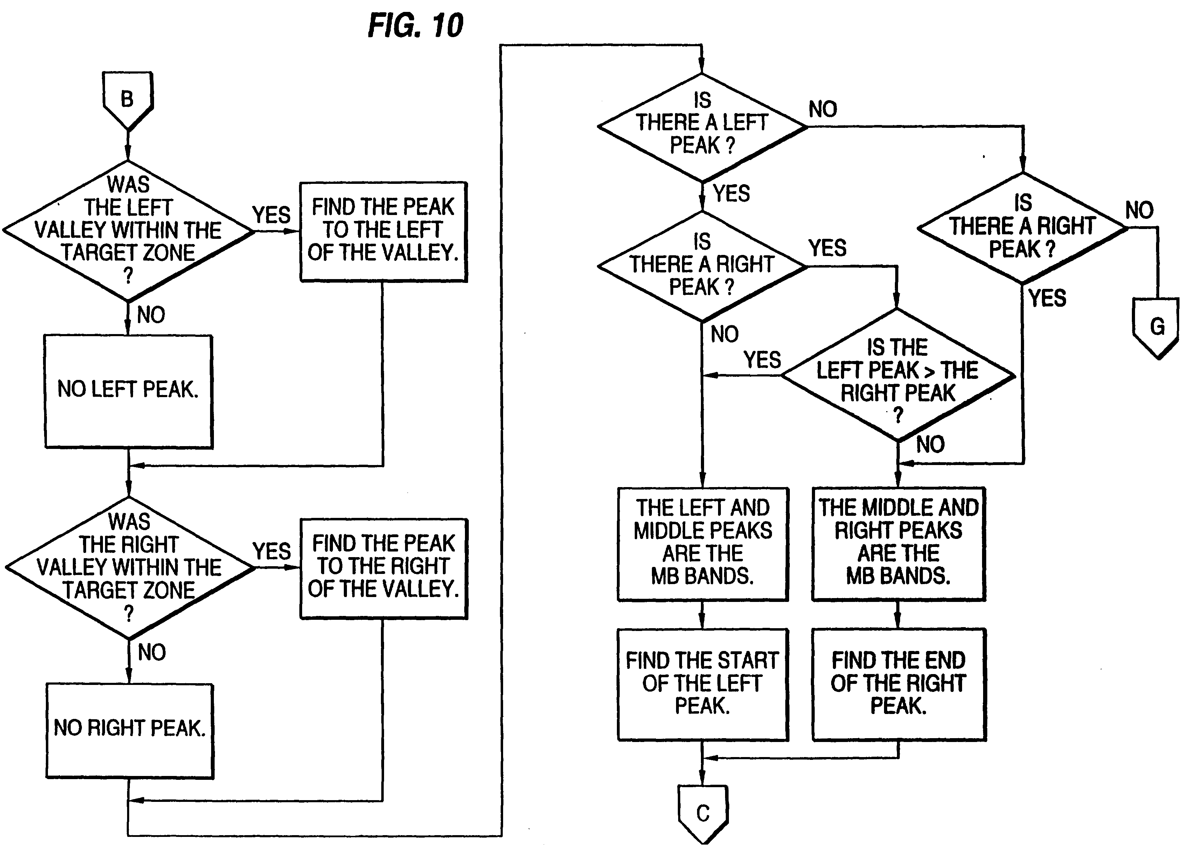

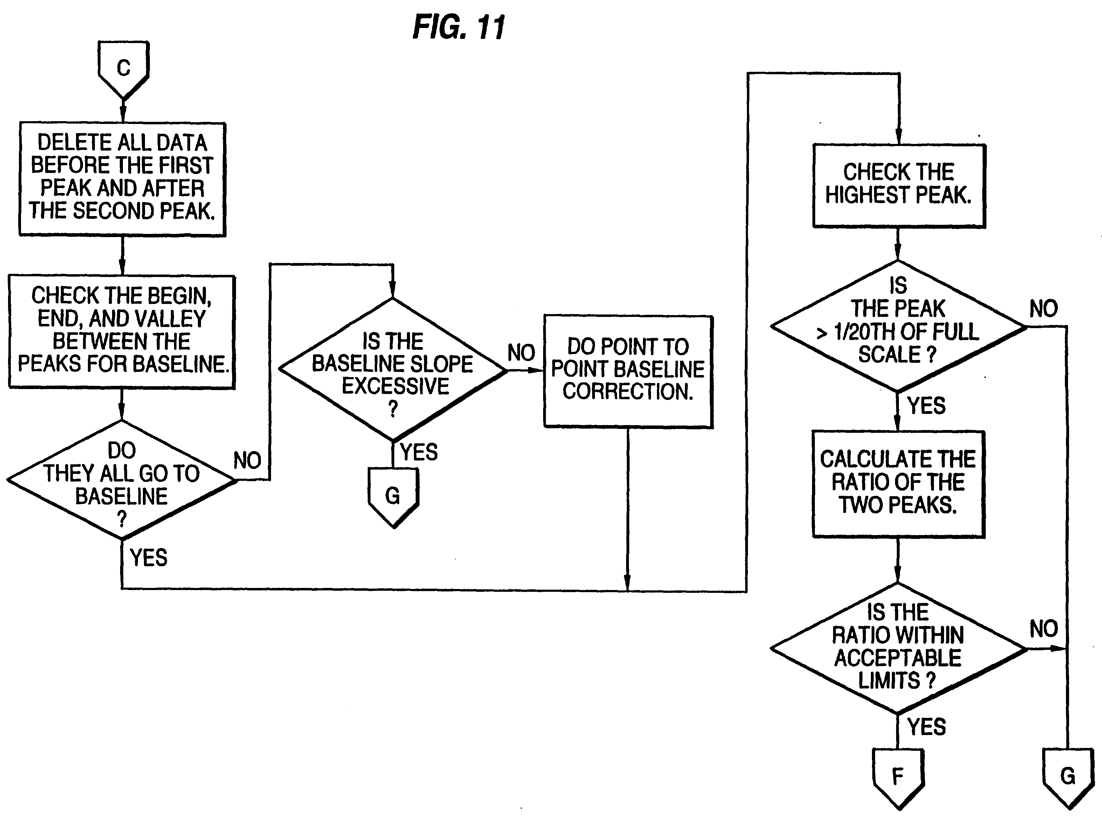

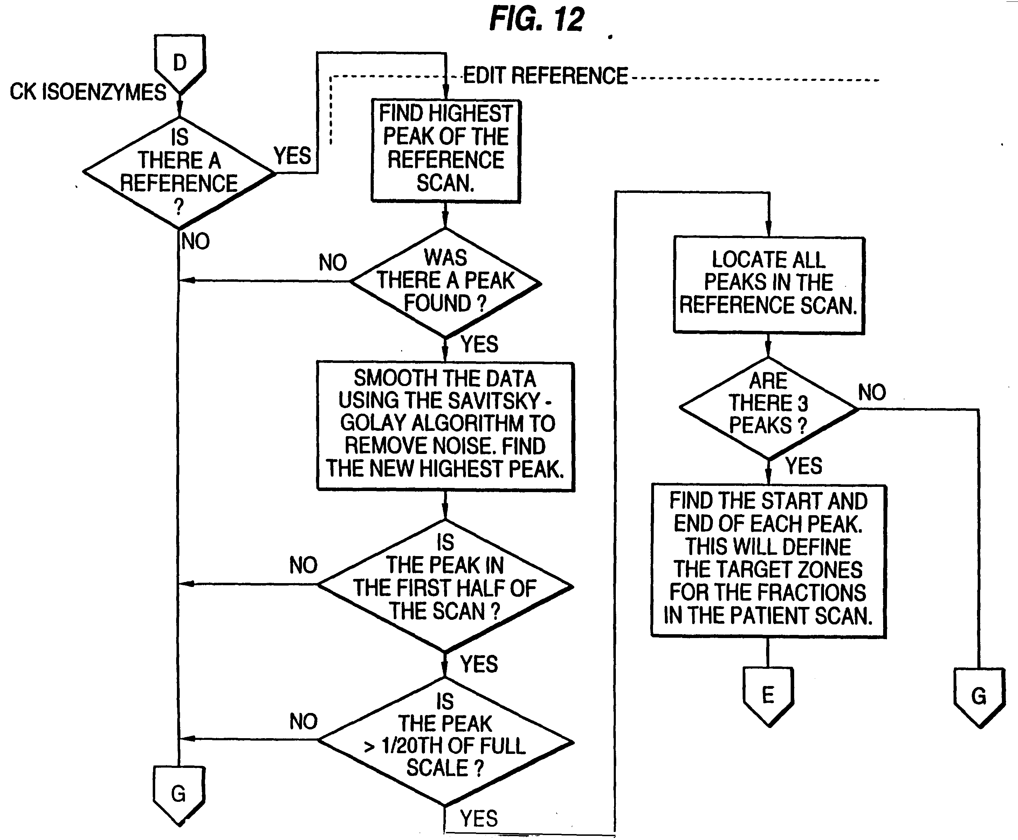

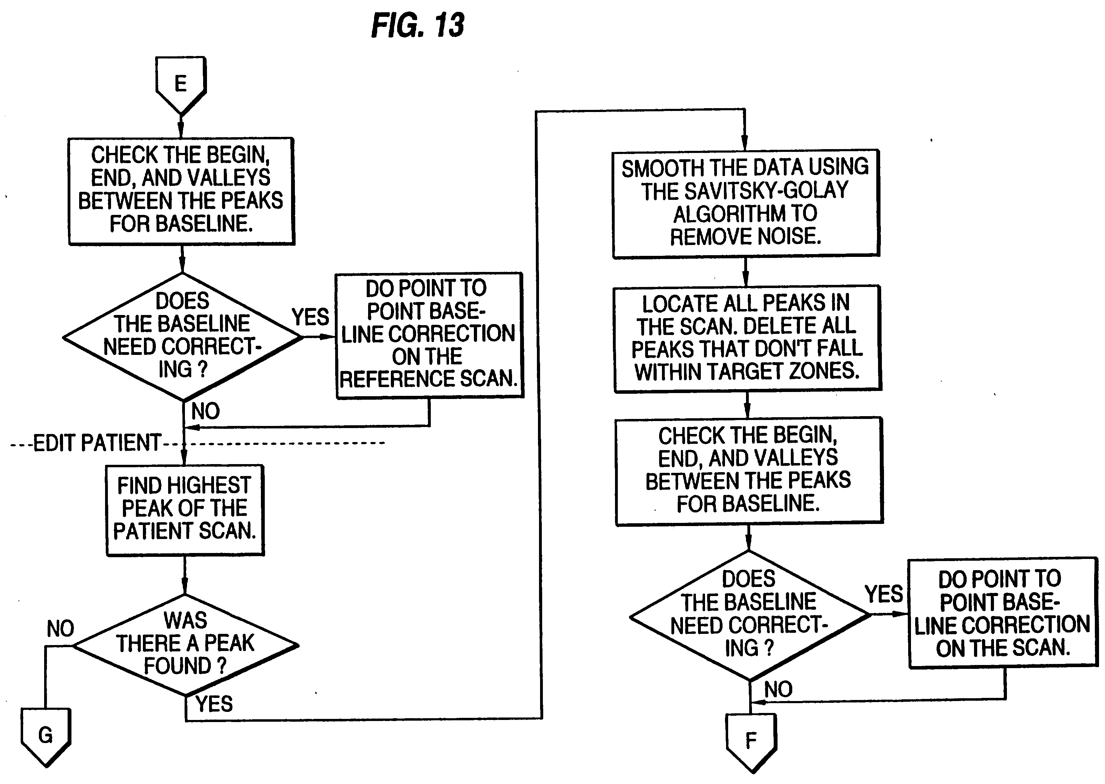

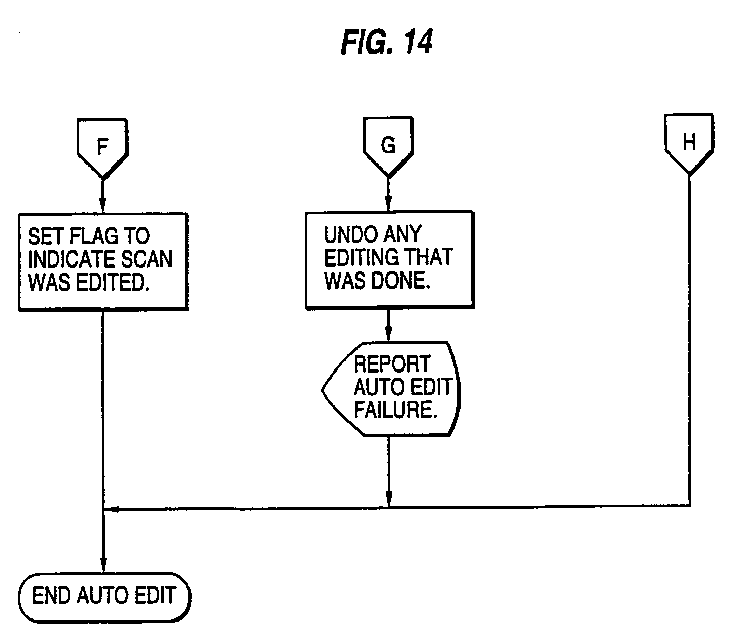

FIGS. 8-14 are flow diagrams of the auto edit process.

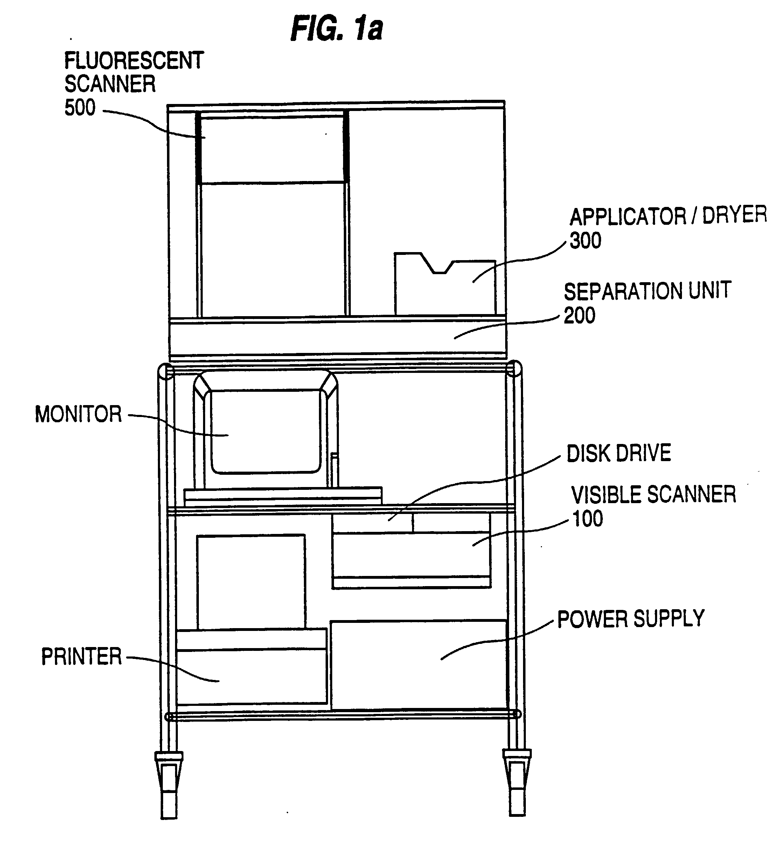

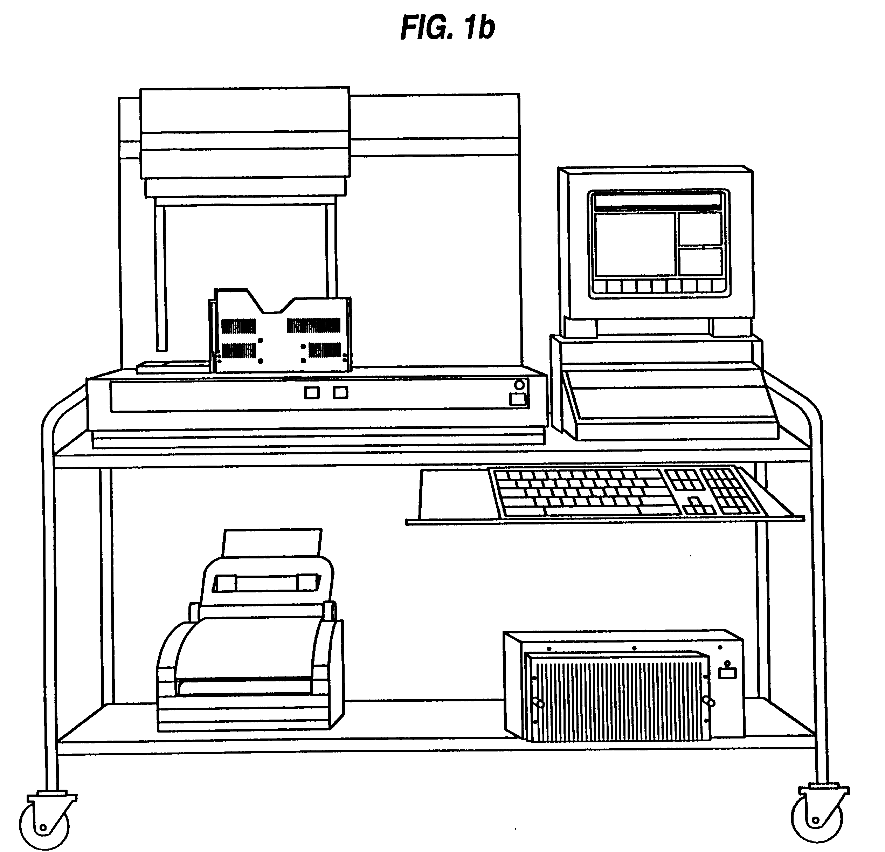

Figures 1A and 1B shows the preferred embodiment for the automated electrophoresis apparatus with a fluorescent scanner. The method and apparatus automate or eliminate the technique-dependent steps of conventional electrophoresis and scanning. The present invention performs scanning in both the fluorescent and visual modes. The present invention performs in-situ electrophoresis and fluorescent scanning.

The fluorescent scanner includes a fluorescent scanning unit including a ultraviolet light source, collimator, ultra-violet light filter, photomultiplier tube and motorized mechanics to move the fluorescent scanner along the Z-axis, which is the conventional nomenclature. During fluorescent scanning, the ultraviolet light source radiates the gel plate and sample. The collimator receives light emitted from the sample and emits a parallel beam of radiation. The ultraviolet filter then filters out certain wavelengths of light which was collimated by the collimator and then the photomultiplier tube receives the emitted light to be measured. The apparatus moves the fluorescent scanner down onto a separation unit for scanning or away from separation unit to provide physical clearance for movement of the gantry.

In the fluorescent scanning mode, the CPU controls the position of the fluorescent scanning unit with greater precision than in the prior art through the use of encoders in combination with stepper motors and home switches to continuously track the exact location of the scanner. This is especially important because the present invention is capable of performing a plurality of different tests, which may require the scanner to be in different positions.

Thus according to the present invention, the scanner may be positioned at any location along the Z-axis. This allows a sample to be placed at any location in the X and Z directions. The Z direction, as shown in FIG. 1, runs from the top to the bottom of the system and the X direction is "left and right" as viewed from the front of the system. The "Y" direction is "forward and rearward". These are conventional nomenclatures. Thus the present invention permits scanning throughout the X and Y directions with application of the sample at various heights, i.e., in the Z-direction. Hence the Z direction controls function to permit adjustments in the height/thickness of the electrophoresis plate, gel height/thickness electrophoresis chamber height, or thickness of the sample.

A gantry is used for sample handling and reagent application. The gantry includes motorized mechanics so that the gantry may be positioned along the Y-axis. The gantry position is controlled by the CPU to any location along the X-axis. This is an improvement over existing automatic electrophoresis devices because all of the positioning is controlled by the gantry. Thus, the plate containing the sample does not have to move, thus limiting and consolidating the number of moving parts. In addition, the ability to move the gantry in the XY plane enables the sample to be placed on the electrophoresis plate by a sample applicator at any location on the X axis. More importantly, a moveable gantry allows the placing of more than one sample line on the plate. These movements are coordinated by using a step motor, encoder and a home switch to move the gantry and a CPU to monitor the exact location of the plate.

The CPU directs the gantry to draw the sample from a sample tray through pipettes. The samples are transferred from a row of wells on the sample tray to the corresponding wells on the electrophoresis plate. The gantry delivers the samples to the gel plate in the electrophoresis chamber on separation unit, returns to the sample tray, then the pipettes are cleaned. The CPU directs the gantry movement so that reagent is delivered to the gel plate on the separation unit), and then the gantry is moved or returned to an initial position by the sample tray to provide clearance for the fluorescent scanner. The pipettes are used to draw and deliver a known volume of the sample from the sample tray to the separation unit. Various pipettes may be used including bulb pipettes or graduated pipettes. Constant or variable volumes may be transferred. Depending upon the specific test, blade-type applicators rather than pipettes may be used to deliver the sample onto the gel plate.

Each pipette includes a plunger and a corresponding barrel. The barrel is a column which holds the sample and the plunger is a rod which fits tightly into the barrel from the top. When the plunger is moved out of the barrel, the sample is drawn into the barrel. When the plunger is thereafter pushed into the barrel, the sample is expelled out of the barrel. Thus the extent of movement of the plunger controls the quantity of the sample drawn out of the sample tray or delivered for testing. Conventional motors and encoders are used to move and control the extent of movement of the plungers. The ability to precisely control the movement of the plungers thus permits precise control over the volume of sample. The motors and encoders are controlled by software. The encoders can pulse light or electricity to precisely track the location of each plunger. With this feature the system can vary the quantity of sample placed on the gel. By using encoders and motors on the barrels, the system is able to adjust the height at which the samples are deposited. This allows for variations in gel plate thickness and the like.

The separation unit includes an electrophoresis chamber 210, in which an electrophoresis plate 220 is placed, and a sample tray. The electrophoresis plate 220 is plastic, preferably a MYLAR plate or backing, on which a coating of cellulose acetate, agarose, or agar gel is applied. One or more motors and encoders track the movement of the gantry, thus allowing the samples to be deposited by the pipettes on the plate.

The preferred electrophoresis chamber 210 contains a base for resting the plate, at least two parallel electrodes, one or more spreader bars, an electrical source, suitable safety contacts, an optional heated chamber lid and a cooling system. In general, the electrophoresis chamber includes has a pair of electrodes attached to vertically extending posts with the electrodes making contact with the electrophoresis plate. One or more spreader bars are located in the vicinity of the plate for spreading reagents and the like. The laboratory technician initially deposits the blood, or any sample, in the sample tray.

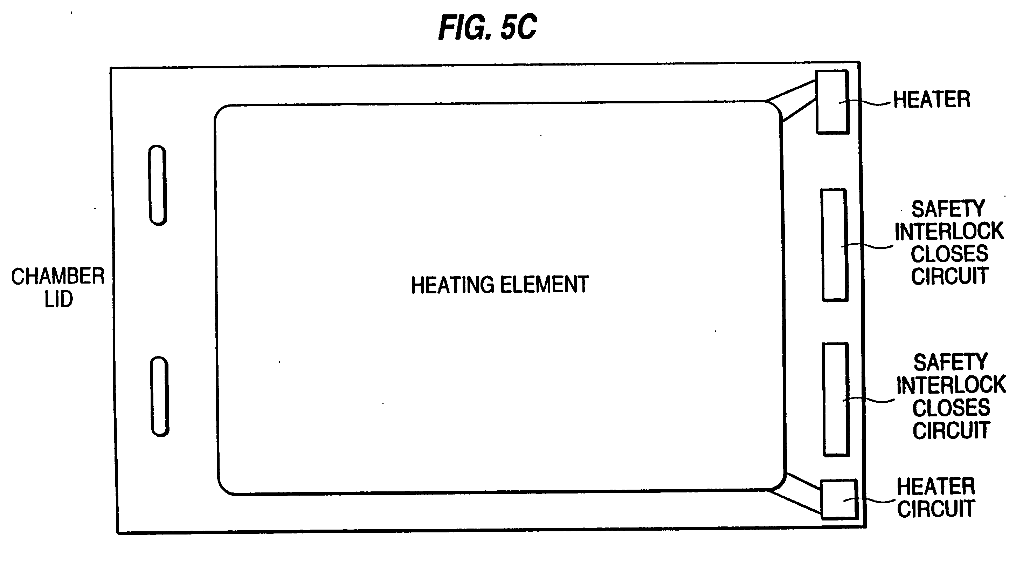

Referring to FIG. 5C an optional heater on the chamber lid aids in controlling the temperature of the electrophoresis chamber. Advantages of a heated lid are the maintaining of a homogenous environment for the electrophoresis plate 220. The chamber lid also has a safety interlock feature. Regardless of whether the lid is heated, the lid contains two contacts or tabs which must complete a safety circuit with four corresponding leads fixed onto the edges of a electrophoresis chamber as shown in FIG. 5C. Each tab bridges or contacts two leads.

The electrophoresis chamber 210 includes a thermo-electric heating/cooling device beneath the electrophoresis plate 220. This thermo-electric heating/cooling device is can take a variety of forms including a heat sink with fins. The preferred embodiment uses a Peltier cooling circuit to cool the plate during electrophoresis and during fluorescent scanning. This is advantageous because the fluorescent activity during electrophoresis increases at lower temperatures. Thus, with the thermo-electric cooling device, the electrophoresis plate 220 is cooled and bombarded with ultra-violet light simultaneously, to lower the temperature of the plate and thus increase fluorescent activity.

The fluorescent scanner, gantry, and separation unit are all controlled by the CPU and the optics and gantry motion is guided by a support. In Fig. 1, the support is connected to the back of the separation unit 200 and is used to support the fluorescent scanner. Tracks are provided on the support for assisting in positioning the scanner onto the electrophoresis chamber.

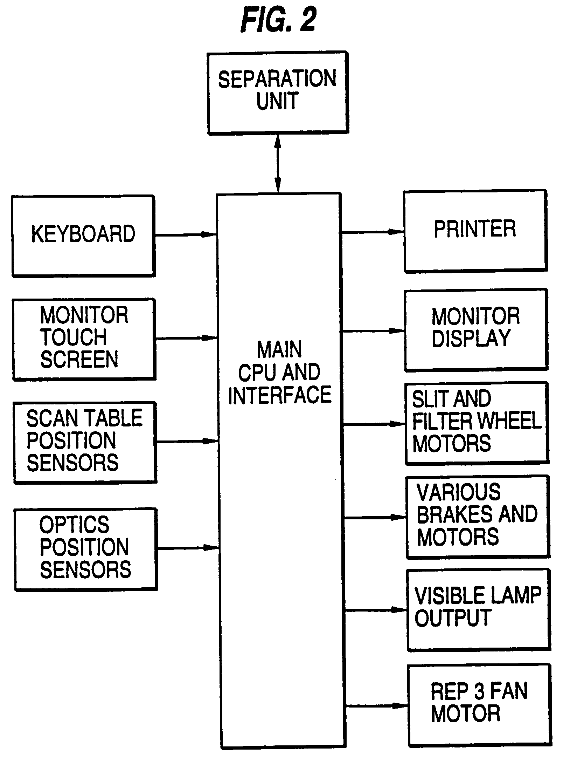

FIG. 2 shows the CPU, which directs the operation of the system. A computer in the separation unit controls the process within that unit. The system also includes a keyboard and a color monitor with a touch screen for the laboratory technician input and data storage to the CPU. The output from the CPU controls the separation unit the various motors, fluorescent scanner, printer, monitor, and fan motor. More specifically, the main CPU receives inputs from a keyboard or from the monitor touch screen and initiates the corresponding functional response. For example, if the laboratory technician request a certain type of test, the main CPU initiates the preprogrammed process associated with that test.

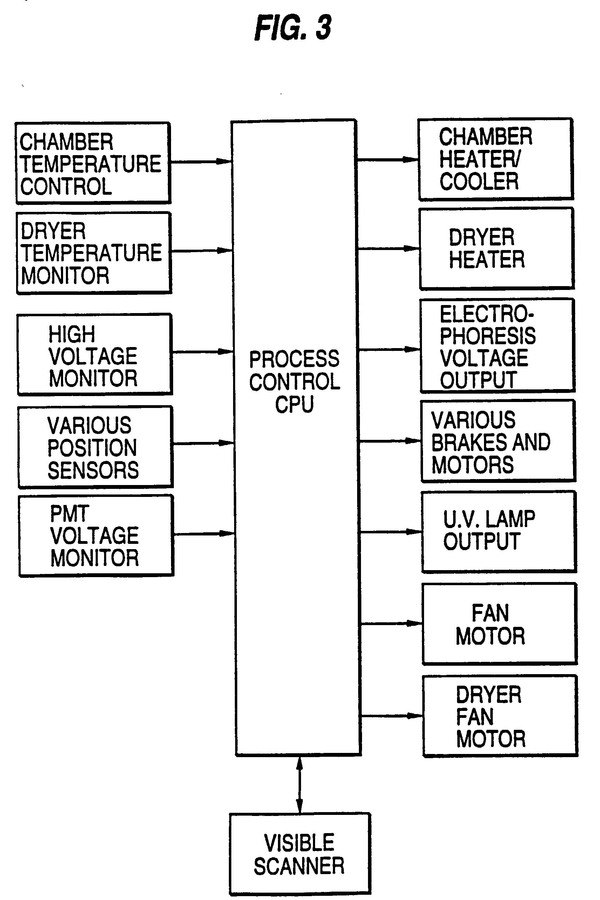

FIG. 3 shows the computer in the separation unit 200. This computer directs only process control within that unit. The computer receives continuously monitored information associated with the status of the system, as opposed to the direct input from the laboratory technician. More specifically, the separation computer monitors the electrophoresis chamber temperature, the dryer temperature, the voltage and the various position motors. For example, if the temperature in the electrophoresis chamber increases above the desired range the computer in the separation unit will initiate the cooling process.

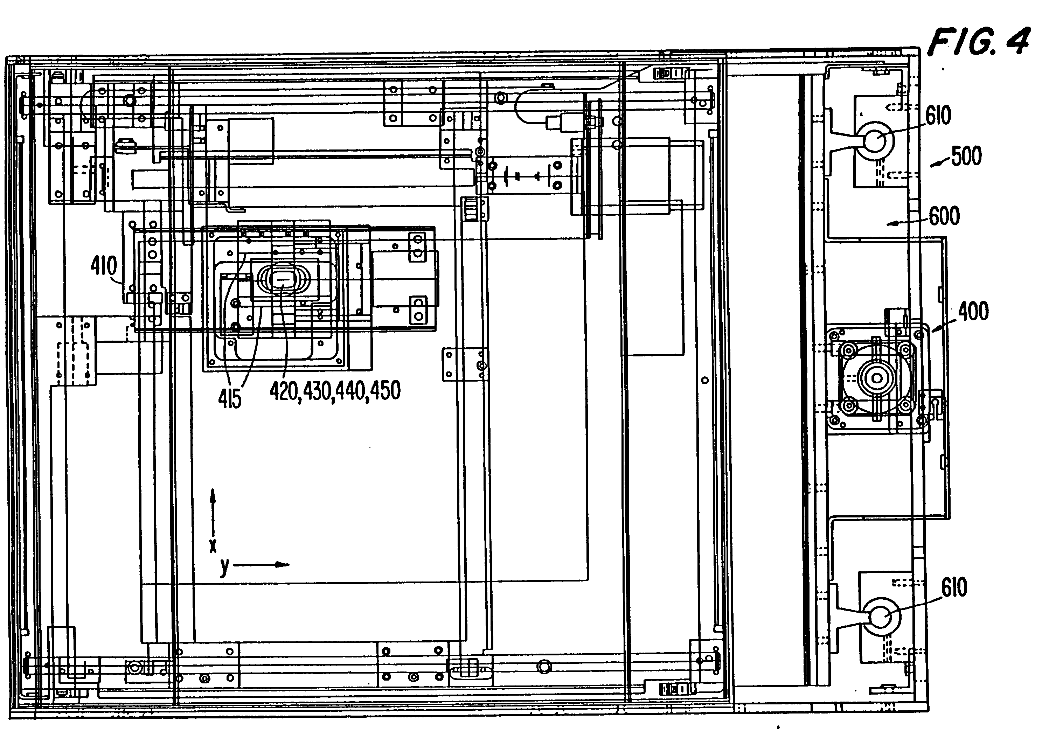

FIG. 4 is a top view of the fluorescent scanner including the mechanics for positioning the fluorescent scanner, and the mechanics for positioning the scanner, which includes the fluorescent light sources, the photomultiplier tube, the filter, and the collimator. The mechanics for positioning the fluorescent scanner moves the scanner along the X axis. This motorized mechanism is located in the center of the fluorescent scanner at the end where the scanner is connected to the support. This support holds the fluorescent scanner above the electrophoresis chamber and has tracks on which the fluorescent scanner rides toward and away from the electrophoresis chamber. A bar 610 positioned on either side of the motorized mechanism within the support to stabilize the scanner. The mechanism for positioning the scanner within the XY plane above the electrophoresis chamber in the separation unit is also located within the fluorescent scanner and uses encoders in both the X and Y directions to continuously monitor the position of the fluorescent scanner via the computer.

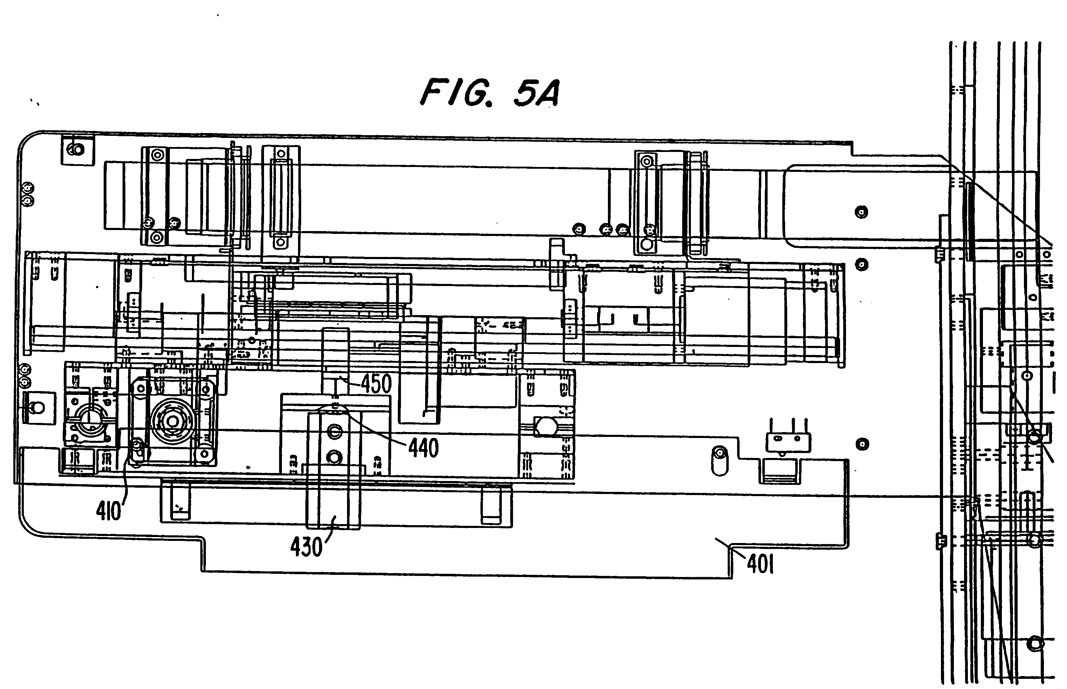

The fluorescent light sources are generally ultra-violet bulbs or tubes extending in the Y direction. One or more bulbs may be used. When viewed in the direction of FIG. 5A, which is a side view, the photomultiplier tube 450, filter 440 and collimator 430 appear as concentric circles and ovals in the center of the fluorescent canner 500. From the side view, the collimator 430 is shown leading to the filter 440 and photomultiplier 450. At the bottom of the Fluorescent scanner 500 is a cover 401 for the chamber 210 in the separation unit 200. The cover creates a light seal over the Electrophoresis Chamber 210 so that collimator 430 is not exposed to any outside light. In addition, FIG. 5A illustrates two microswitches located on each side of the cover. These microswitches are a safety device which stops the fluorescent scanners descent in the Z direction if there is any contact during movement. Upward pressure on the cover triggers the microswitches and shuts down the stepper motors moving the unit in the Z-direction.

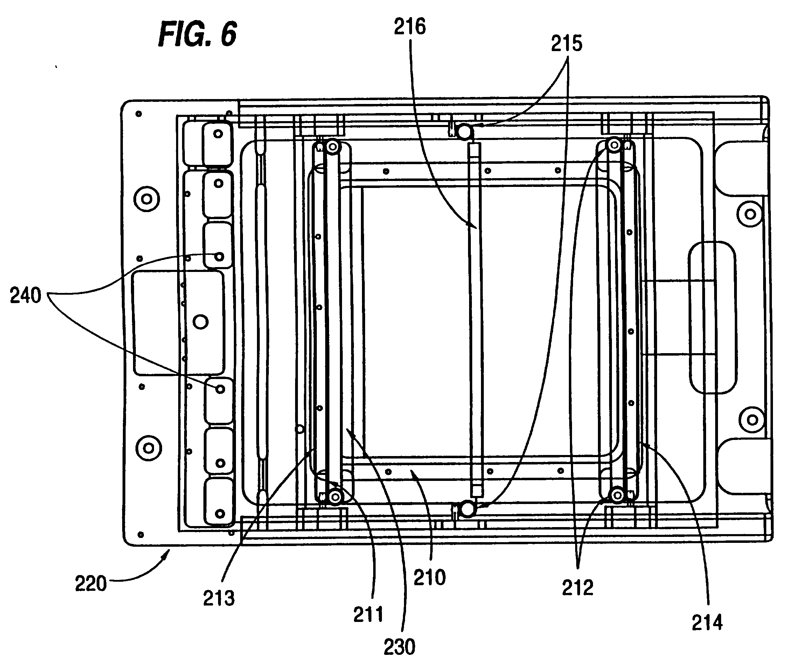

FIG 6 is a top view of the chamber 210 with the electrophoresis plate 220 positioned in the chamber. The chamber includes two pairs of electrode posts 211, 212 extending vertically to a level substantially the same as the vertical level of electrophoresis plate 220. A pair of electrodes and spreaders are also shown.

The first pair of posts 211 and the second pair of posts 212 are preferably constructed of a permanently magnetized material such as iron, and are adapted to conduct electrophoreses current. A first combination electrode/spreader bar 213 is disposed at one longitudinal end of chamber 210 and a second combination electrode/spreader bar 214 is disposed at the other longitudinal end of the chamber 210. The posts are preferably constructed of a 1/4-inch thick ferro-magnetic material such as iron or steel. Thus when the electrode/spreader bar and the bar are disposed as illustrated in FIG. 6, they are maintained in contact with electrode post pair 211 and electrode post pair 212 by the magnetic force between the posts and the ferro-magnetic material of the bar. Preferably the bars have steel tips which contact the magnetic posts.

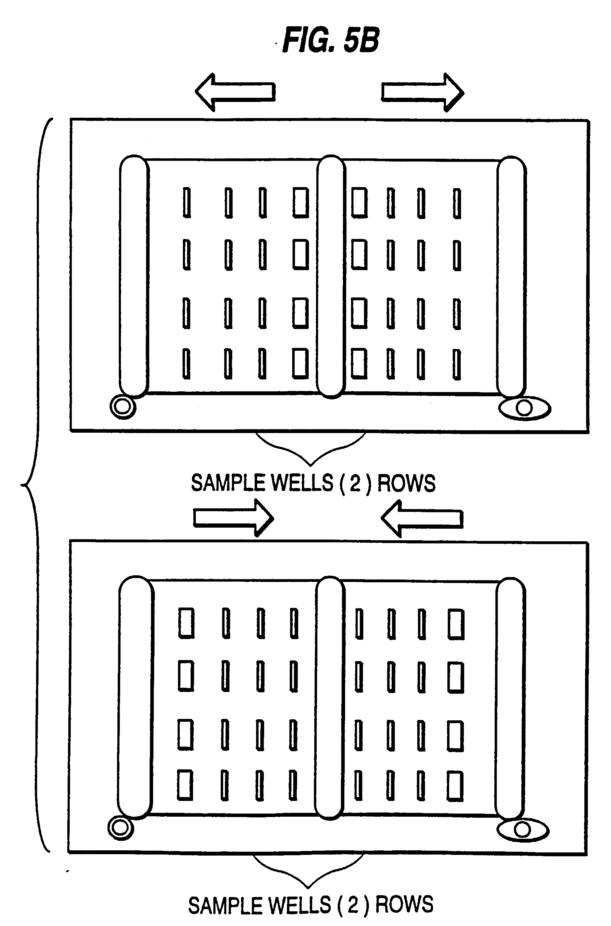

Referring next to FIG. 5B, the electrophoresis chamber is divided into two smaller chambers and the electrophoreses plates are identified as 'double zone plates'. In these double zone plates, there are two rows of sample wells. The laboratory technician can select the desired polarity depending on the desired direction of separation. The upper portion of FIG. 5B represents the two outer electrodes being established as anodes with the middle electrode being established as the cathode. The lower portion of FIG. 5B illustrates the opposite polarity, i.e., the outer two electrode bars being cathodes and the inner electrode bar being the anode. Selecting the polarity of the bars may be done dynamically in software by the system or by the laboratory technician. To accomplish the 'double zone' plates, reference should be had to FIG. 6 where a third pair of posts 215 is located between the first pair of posts 211 and the second pair of posts 212. This third pair of posts is designed to accommodate the aforementioned third or middle electrode bar 216. The middle electrode bar 216 allows the electrophoresis chamber 210 to contain two separate electrical zones with a smaller distance between the electrode bars. In addition, the preferred embodiment also contains a glass spreader bar 230 on each side because adding a middle electrode/spreader prevents one spreader 230 from spreading the reagents across the entire electrophoresis plate 220. With two spreaders 230, if a middle electrode is inserted, there is a spreader 230 on each side of the middle electrode to spread both of the smaller chambers or zones which have been created. Further, the ability to create two separate zones also allows the laboratory technician to have two electrophoretic fields with opposite polarity. In the present invention, regardless of the number of individual zones, each is controlled by the same CPU.

The third pair of posts is further apart than the first and second pairs to allow a spreader bar to pass between the third pair of posts. Other alternative embodiments use a wire as the middle electrode 216, instead of a quarter inch thick carbon or ferro-magnetic bar, which still creates the smaller zones, but only requires one spreader because the spreader can pass over a thin middle wire and spread the reagents throughout both of the smaller zones. The wire must be mounted on the side of the third pair of posts 215. Thus, in the preferred embodiment, the laboratory technician can dynamically configure the electrophoresis chamber 210 such as a single zone with one anode and one cathode, or two zones with a center electrode and two common outer electrodes.

The spreader bars 230 are designed to spread the reagent across the plate 220, after the reagent is deposited by the gantry. The reagent highlights the distinctions created by electrophoresis. Thus, it is important to have the reagent evenly distributed throughout the sampled material for some tests.

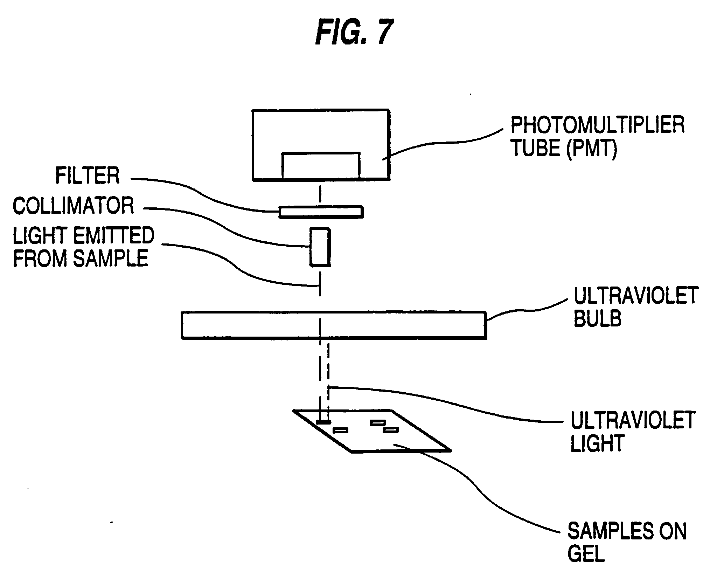

FIG. 7 is a side view of the fluorescent scanner. The samples deposited on the gel are illuminated by the ultraviolet light source. The light fluoresced and emitted from the sample goes through the collimator and filter which filters out the ultraviolet light reflected by the sample from the light source.

More specifically, when the preferred embodiment is in the fluorescent mode, an ultraviolet light excites certain compounds in the sample. These compounds result from sample/reagent activity. The excited compounds emit light at a wavelength different from that of the ultraviolet source. The ultraviolet lamp is preferred because of safety. Other light sources may be used to radiate samples. Light emitted by the sample reaction product passes through a collimating slit and ultra-violet filter. This results in a high resolution image and permits only light emitted from the sample to reach the photomultiplier tube. The fluorescent scanner is lowered over the electrophoresis chamber 210 blocking out other light. The CPU directs the operation of the optics X and Y motors to position the scanner over the samples and move the scanner relative to the samples.

The photomultiplier tube generates an output signal, such as electrical current in proportion to the amount of light received. The relationship between the emitted light and the concentration of the fluorescing sample is linear. Since the light emitted by the sample is low intensity, the voltage to the photomultiplier tube is variable and is normally set automatically by the instrument. The photomultiplier tube voltage may be manually increased or decreased by the laboratory technician to allow higher or lower amplification of the signal if necessary. The photomultiplier tube signal is used by the CPU to calculate data points and generate the areas under the resultant curves for the peaks in the pattern.

Using the foregoing embodiments, methods and processes, the automatic electrophoreses apparatus with visible scanning and in situ fluorescent scanning allows the system to maximize functionality, performance, and safety. It will be clear to those in the art that many and varied modifications can be made to the preferred embodiment shown and described. Various changes and modifications are intended to be within the scope of the appended claims.

## Claims

1. An apparatus for electrophoresing samples and for scanning the electrophoresed samples comprising:
an electrophoresis chamber for receiving an electrophoresis plate and samples to be electrophoresed;
a fluorescent scanner operable in the fluorescent scanning mode for scanning the electrophoresed samples which fluoresce when irradiated with light and for receiving the fluoresced light emitted from the sample in response to the irradiated light;
a visible scanner operable in the visible scanning mode for scanning the electrophoresed samples and for receiving the visible light; and
a central processing unit, connected to the fluorescent scanner and the visible scanner for selecting the mode of scanning, for controlling the operation of the selected scanner, and for providing an output of the result of the scanning.

2. The apparatus of claim 1 including:
a gantry for receiving samples, and for delivering samples to the electrophoresis chamber;
said central processing unit further connected to and controlling the movement of the gantry.

3. The apparatus of claim 1 or 2 wherein the fluorescent scanning occurs in situ.

4. The apparatus of any preceding claim wherein the electrophoresis chamber contains multiple electrodes and more than one electrophoresis zone.

5. The apparatus of claim 4, wherein the electrophoresis chamber contains two electrophoresis zones, a plurality of electrodes, and a spreader bar for spreading reagents, the spreader bar operable to move over at least one electrode.

6. The apparatus of any preceding claim wherein a gel plate is positioned in the electrophoresis chamber, and wherein said gantry applies the sample to the gel plate and the reagents to the gel plate.

7. The apparatus of any preceding claim wherein the fluorescent scanner includes a source of light positioned to irradiate the electrophoresed sample and a detector for receiving the light emitted from the irradiated electrophoresed sample.

8. The apparatus of any preceding claim wherein the visible scanner includes a source of light positioned to be directed on the electrophoresed sample and a detector for receiving visible light reflected from the electrophoresed sample.

9. An apparatus for electrophoresing samples and for scanning the electrophoresed samples comprising:
an electrophoresis chamber for receiving an electrophoresis plate and samples to be electrophoresed;
a photodetector operable in the fluorescent scanning mode for receiving fluoresced light from an electrophoresed sample;
a photodetector cell operable in the visible scanning mode for receiving visible light from an electrophoresed sample; and
a central processing unit, for selecting the mode of scanning and for providing an output of the result of the scanning.
